# EUROPEAN PATENT APPLICATION

(11) **EP 1 863 259 A1**
(43) Date of publication of application: **05.12.2007**
(21) Application number: 07101097.9
(22) Date of filing: 24.01.2007
(51) Int. Cl.: H04M 1/02, G06F 3/14, H04M 1/725

(54) **Mobile terminal having wide viewing function digital broadcasting**

(30) Priority: 06.03.2006 KR 20060020837
(71) Applicant: Samsung Electronics Co., Ltd., Suwon-si, Gyeonggi-Do (KR)
(72) Inventor: Kim, Nam-Kyung, Gyeonggi-do (KR); Bae, Tae-Jeong, Gyeonggi-do (KR)
(74) Representative: Grünecker, Kinkeldey, Stockmair & Schwanhäusser Anwaltssozietät

(57) **Abstract**

Provided is a mobile terminal having a wide viewing function of a digital broadcasting that includes a digital broadcasting receiver for receiving digital broadcasting signals; an image splitter for splitting a digital broadcasting image according to a rotating direction of a display unit; a rotation detector for detecting the rotating direction of the display unit; and a controller for controlling the image splitter for splitting the received digital broadcasting image according to the detected rotating direction of the display unit, and displaying the split images. Accordingly, the mobile terminal can display the digital broadcasting on the wide screen by splitting the digital broadcasting image.

## Description

The present invention relates generally to a mobile terminal having a digital broadcasting receiver module, and in particular, to a mobile terminal providing a wide screen and a sound service so that users can conveniently receive a digital broadcasting service.

With the rapid development of mobile communications, mobile terminals capable of providing wireless voice communication and data exchange have become necessities. At the beginning of mobile terminals, they were merely regarded as devices that are easy to carry and can provide wireless communication. However, with the development of technologies and the introduction of wireless Internet, the application range of the mobile terminals is increasing in order to meet a user's increasing demands. For example, the mobile terminals provide, but are not limited to, a telephone call function, a scheduling function, a game function, a remote control function using a near field communication, and an image photographing function using a built-in digital camera, and so on.

Moreover, while the use of digital multimedia is increasing with the development of digital multimedia technology, mobile terminals that can receive digital broadcasting are actively developed. These mobile terminals attract much interest from the users.

However, because the primary aim of the mobile terminal is the portability, the size of a Liquid Crystal Display (LCD) for the mobile terminal is limited. In addition, the sound quality of the mobile terminal is proportional to the size of a speaker. Therefore, the mobile terminal made focusing on the portability provides a lower sound quality and a lower picture quality as the size of the LCD is smaller. Consequently, vivid images cannot be provided to the users.

Meanwhile, mobile terminals with a rotatable LCD (90°) have been produced in order to provide a wide screen. However, these mobile terminals cannot meet a user's demand for digital broadcasting service.

Therefore, there is a need for a mobile terminal that has a wide screen and provides a high quality sound so that the user can conveniently and vividly receive a digital broadcasting service.

The present invention has been designed to substantially solve at least the above problems and/or disadvantages and to provide at least the advantages described herein. Accordingly, the object of the present invention is to provide an apparatus and a method for providing a wide-screen digital broadcasting service in a mobile terminal.

This object is solved by the subject matter of the independent claims.

Preferred embodiments are defined in the dependent claims.

An aspect of the present invention is to provide an apparatus and method for splitting a digital broadcasting image in a mobile terminal.

A further aspect of the present invention is to provide an apparatus and method for providing a wide screen using digital broadcasting images split in different directions.

According to one aspect of the present invention, there is provided a mobile terminal having a wide viewing function of a digital broadcasting that includes a digital broadcasting receiver for receiving digital broadcasting signals; an image splitter for splitting a digital broadcasting image according to a rotating direction of a display unit; a rotation detector for detecting the rotating direction of the display unit; and a controller for controlling the image splitter to split the received digital broadcasting image according to the detected rotating direction of the display unit, and displaying the split images.

According to another aspect of the present invention, there is provided a method for providing a wide viewing function of a digital broadcasting that includes when a wide viewing mode is set, detecting a rotating direction of a display unit; when the display unit is rotated in a first direction, splitting an image according to the first direction; and transmitting the split image to the display unit.

The present invention will become more apparent from the following detailed description when taken in conjunction with the accompanying drawings in which:
FIG. 1 is a block diagram of a mobile terminal having a wide viewing mode according to the present invention;
FIG. 2 is a flowchart illustrating a method for automatically splitting an image in a wide viewing mode in a mobile terminal having a digital broadcasting receiver module according to the present invention;
FIG. 3 is a flowchart illustrating a method for splitting an image in a wide viewing mode in accordance with a user's selection in a mobile terminal having a digital broadcasting receiver module according to the present invention; and
FIGs. 4A to 4C are pictures of digital broadcasting images in a mobile terminal according to the present invention.

Preferred embodiments of the present invention will be described herein with reference to the accompanying drawings. In the following description, well-known functions or constructions are not described in detail since they would obscure the invention in unnecessary detail.

The terms "first direction" and "second direction" mean states when a display unit is rotated up to its rotatable positions. That is, the first direction means a state when the display unit is rotated 90 degrees counterclockwise and the second direction means a state when the display unit is rotated 90 degrees clockwise.

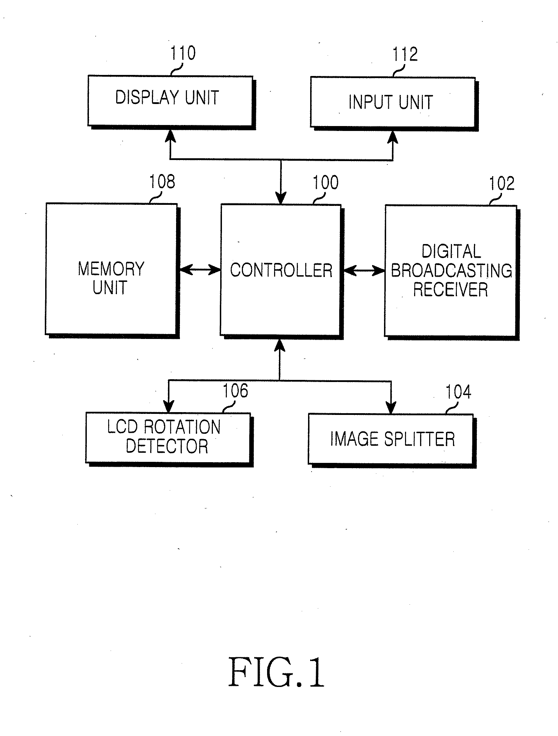

FIG. 1 is a block diagram of a mobile terminal having a wide viewing mode according to the present invention. The mobile terminal includes all terminals that can receive digital broadcasting. Examples of the mobile terminal include cellular phones, Personal Communication System (PCS) phones, Personal Data Assistants (PDAs), International Mobil Telecommunication-2000 (IMT-2000) terminals, and Broadband System terminals. The digital broadcasting includes a Digital Multimedia Broadcasting (DMB) and Digital Video Broadcasting (DVB).

Referring to FIG. 1, the mobile terminal includes a controller (e.g., a microprocessor unit (MPU)) 100, a digital broadcasting receiver 102, an image splitter 104, an LCD rotation detector 106, a memory unit 108, a display unit 110, and an input unit 112.

The controller 100 controls an overall operation of the mobile terminal. When a wide viewing mode is selected, the controller 100 detects a direction of the display unit 110 and splits an image in one of a first direction and a second direction according to the detected direction of the display device 110 or a user's selection. A detailed description about the general control operation of the controller 100 will be omitted for conciseness.

The digital broadcasting receiver 102 receives digital broadcasting. The LCD rotation detector 106 detects a rotating direction of the display unit 110 in order to split a digital broadcasting image in a direction corresponding to the rotation of the display unit 110. The image splitter 104 splits the digital broadcasting image displayed on the display unit 110 in accordance with the user's selection or the rotating direction of the display unit 110. That is, after the digital broadcasting receiver 102 receives an entire digital broadcasting data, the controller 100 displays an image on the display unit 110 in synchronization with the sync signals. At this point, the image splitter 104 reduces the horizontal sync by half of a total number of entire pixels (in the case of a wide viewing mode, horizontal pixels). Thereby, the broadcasting image is split into a left image and a right image.

The memory unit 108 includes a Read Only Memory (ROM) and a Random Access Memory (RAM). The memory unit 108 stores a variety of reference data and microcodes of a program for processing and controlling the controller 100. The display unit 110 displays, but are not limited to, status information generated during operations, numerals and characters, moving pictures and still pictures, messages, and so on. In addition, the display unit 110 displays the split digital broadcasting images.

A color LCD can be used as the display unit 110. The display unit 110 displays the digital broadcasting images split by the image splitter 104. The input unit 112 includes numeric keys of digits 0-9 and a plurality of function keys, such as navigation keys and character input keys. In addition, the input unit 112 provides a split direction of the digital broadcasting image, which is selected by the user, to the controller 100.

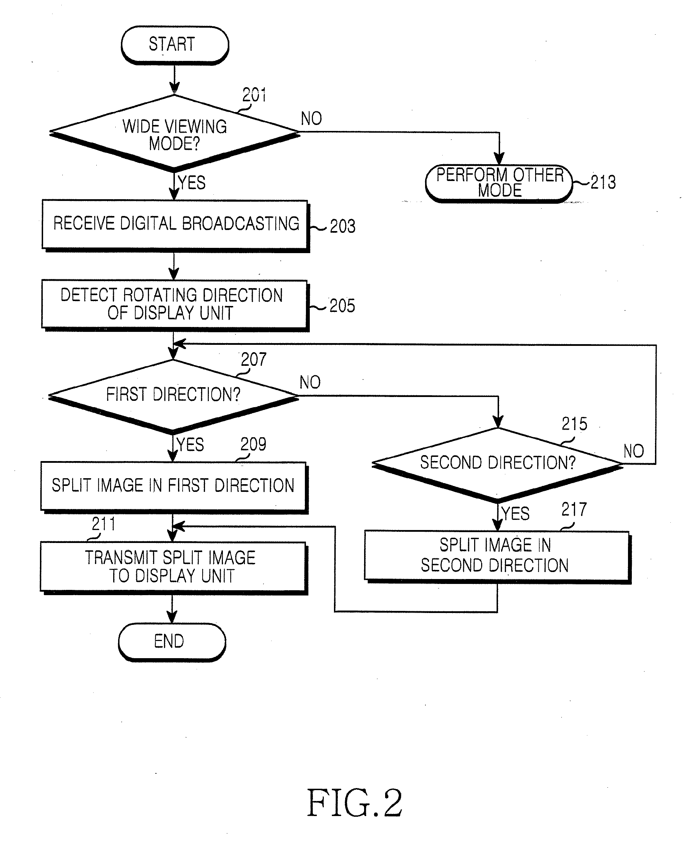

FIG. 2 is a flowchart illustrating a method for automatically splitting an image in a wide viewing mode in a mobile terminal having a digital broadcasting receiver module according to the present invention. Referring to FIG. 2, in step 201 the controller 100 determines whether a wide viewing mode for displaying digital broadcasting received from the digital broadcasting receiver 102 on a wide screen is set by a user's key manipulation. In step 213, when the wide viewing mode is not set, the controller 100 performs other mode (e.g., a normal viewing mode).

In step 203, when the wide viewing mode is set, the controller 100 receives the digital broadcasting from the digital broadcasting receiver 102 and in step 205,an LCD rotation detector 106 detects a rotating direction of the display unit 110 . The LCD rotation detector 106 can be a hall sensor or a Magneto-Resistive (MR) sensor, which can detect one of the left and right rotation of the display unit 110.

In step 207, the controller 100 determines whether the rotating direction of the display unit 110 is the first direction. When the rotating direction of the display unit 110 is not the first direction, the controller 100 determines whether the rotating direction of the display unit 110 is the second direction in step 215.

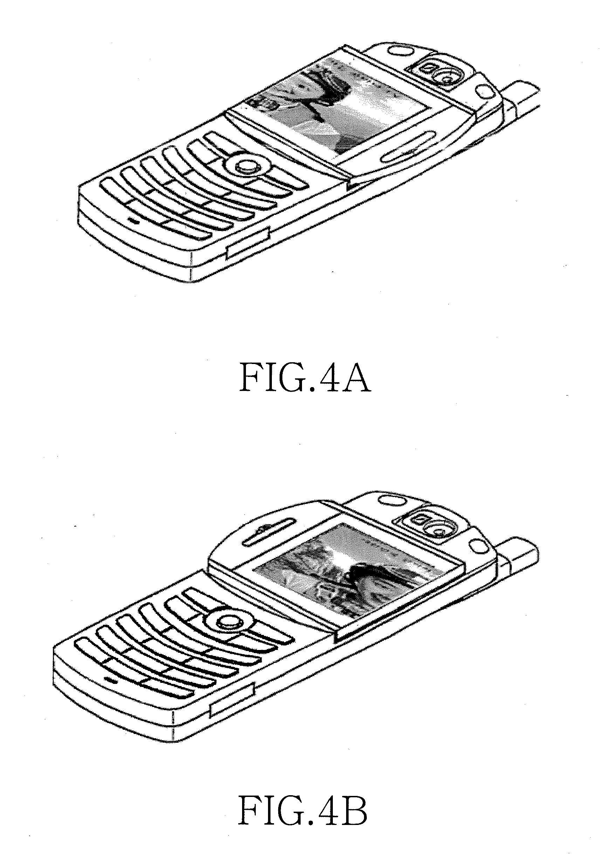

In step 215, when the rotating direction of the display unit 110 is not the second direction the process returns to step 207. Otherwise in step 215, when the rotating direction of display unit 110 is the second direction , in step 217 the image splitter 104 splits the image in the second direction . Then, in step 211 the split image is transmitted to the display unit 110 . For example, when the display unit 110 is rotated clockwise as illustrated in FIG. 4(A), the right half portion of the image is displayed on the display unit 110.

In step 207, when the rotating direction of the display unit 110 is the first direction, in step 209 the image splitter 104 splits the image in the first direction . Then, in step 211 the split image is transmitted to the display unit 110 . For example, when the display unit 110 is rotated counterclockwise as illustrated in FIG. 4(B), the left half portion of the image is displayed on the display unit 110. Then, the controller 100 terminates the algorithm.

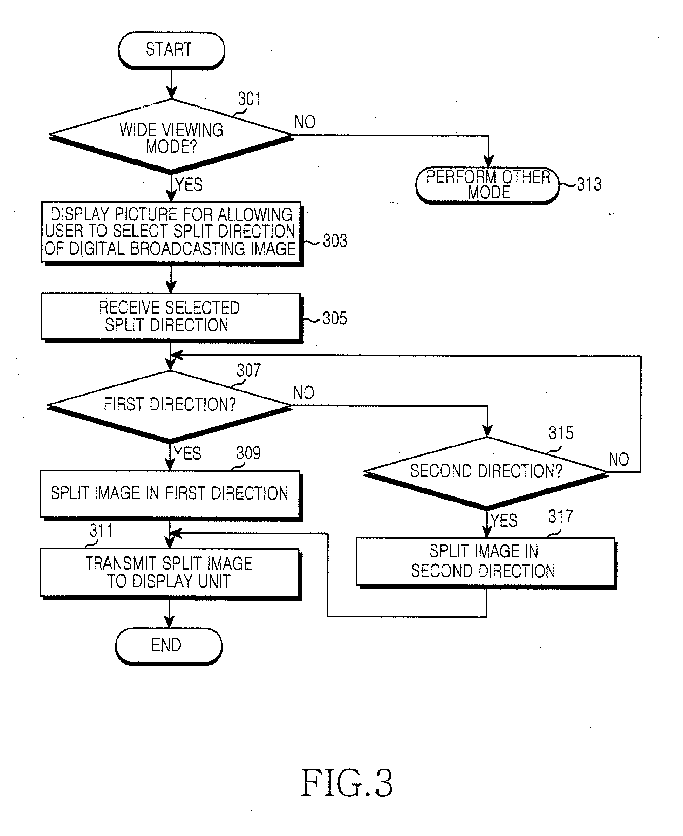

FIG. 3 is a flowchart illustrating a method for splitting an image in a wide viewing mode selected by a user in a mobile terminal having a digital broadcasting receiver module according to the present invention. Referring to FIG. 3, the controller 100 determines whether a wide viewing mode for displaying digital broadcasting received from the digital broadcasting receiver 102 on a wide screen is set by a user's key manipulation in step 301. In step 313, when the wide viewing mode is not set, the controller 100 performs other mode (e.g., a normal viewing mode).

In step 303, when the wide viewing mode is set, the controller 100 displays a picture for allowing the user to select a split direction of the digital broadcasting image (e.g., a left direction or a right direction). In step 305, the controller 100 receives the selected split direction. In step 307, the controller 100 determines whether the selected split direction is the first direction.

In step 307, when the selected split direction is not the first direction , in step 317 the controller 100 determines if the selected split direction is the second direction . When the selected split direction is not the second direction in step 315, the process returns to step 307.

In step 315, when the selected split direction is the second direction , the image splitter 104 splits the image in the second direction in step 317. Then, in step 311 the split image is transmitted to the display unit 110 in step 311.

In step 307, when the selected split direction is the first direction in step 307, the image splitter 104 splits the image in the first direction in step 309 and the split image is displayed on the display unit 110 in step 311. Then, the controller 100 terminates the algorithm.

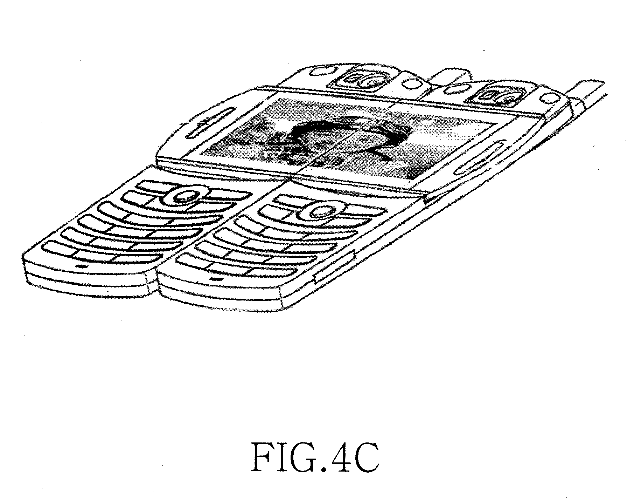

As described above, the mobile terminal having the rotatable display unit can split the digital broadcasting image using the methods of FIGs. 2 and 3. Using the two mobile terminals (see FIGs. 4A and 4B), the user can view the digital broadcasting on the wide screen as illustrated in FIG. 4C.

As described above, the mobile terminal having the digital broadcasting receiver module can display the digital broadcasting on the wide screen by splitting the digital broadcasting image.

While the invention has been shown and described with reference to certain preferred embodiments thereof, it will be understood by those skilled in the art that various changes in form and details may be made therein without departing from the scope of the invention as defined by the appended claims.

## Claims

1. A mobile terminal having a wide viewing function of a digital broadcasting, comprising:
a digital broadcasting receiver for receiving digital broadcasting signals;
an image splitter for splitting a digital broadcasting image according to a rotating direction of a display unit;
a rotation detector for detecting the rotating direction of the display unit; and
a controller for controlling the image splitter to split the received digital broadcasting image according to the detected rotating direction of the display unit, and displaying the split images.

2. The mobile terminal of claim 1, wherein the controller splits the received digital broadcasting image in a direction selected by a user in a split direction selection menu.

3. The mobile terminal of claim 1 or 2, wherein the rotation detector detects the rotating direction of the display unit by using one of a Hall sensor and an Magneto-Resistive sensor.

4. The mobile terminal of claim 3, wherein the image splitter splits the digital broadcasting image to display a left half portion of the image when the detected rotating direction of the display unit is a first direction, and splits the digital broadcasting image to display a right half portion of the image when the detected rotating direction of the display unit is a second direction.

5. The mobile terminal of claim 4, wherein the first direction is a state when the display unit is rotated 90 degrees counterclockwise, and the second direction is a state when the display unit is rotated 90 degrees clockwise.

6. A method for providing a wide viewing function of a digital broadcasting in a mobile terminal, comprising the steps of:
when a wide viewing mode is set, detecting a rotating direction of a display unit;
when the display unit is rotated in a first direction, splitting an image according to the first direction; and
transmitting the split image to the display unit.

7. The method of claim 6, further comprising:
when the display unit is rotated in a second direction, splitting the image according to the second direction; and
transmitting the split image to the display unit.

8. The method of claim 6 or 7, wherein the image is split in one of the first and the second direction in accordance with a user's selection.

9. The method of claim 8, wherein the splitting of the image in the first direction is for splitting the digital broadcasting image to display a left half portion of the image, and the splitting of the image in the second direction is to split the digital broadcasting image to display a right half portion of the image.

10. The method of claim 9, wherein the first direction is a state when the display unit is rotated 90 degrees counterclockwise, and the second direction is a state when the display unit is rotated 90 degrees clockwise.

11. A mobile terminal having a function of wide view, comprising:
an image splitter for splitting a digital image; and
a controller for controlling the image splitter to split the digital image according to a detected rotating direction of a display unit, and displaying the split images on the display unit.

12. The mobile terminal of claim 11, wherein the rotating direction of the display unit is detected by using one of a Hall sensor and an Magneto-Resistive sensor.

13. The mobile terminal of claim 12, wherein the image splitter splits the digital broadcasting image to display a left half portion of the image when the detected rotating direction of the display unit is a first direction, and splits the digital broadcasting image to display a right half portion of the image when the detected rotating direction of the display unit is a second direction.

14. The mobile terminal of claim 13, wherein the first direction is a state when the display unit is rotated 90 degrees counterclockwise, and the second direction is a state when the display unit is rotated 90 degrees clockwise.

15. A method for providing a wide view in a mobile terminal, comprising the steps of:
detecting a rotating direction of a display unit;
splitting an image according to a first rotating direction of the display unit;
transmitting the split image according to a first rotating direction to the display unit.
splitting the image according to a second rotating direction of the display unit; and
transmitting the split image according to a second rotating direction to the display unit.

16. The method of claim 15, wherein the splitting of the image in the first direction is for splitting the digital broadcasting image to display a left half portion of the image, and the splitting of the image in the second direction is to split the digital broadcasting image to display a right half portion of the image.

17. The method of claim 16, wherein the first direction is a state when the display unit is rotated 90 degrees counterclockwise, and the second direction is a state when the display unit is rotated 90 degrees clockwise.
